# EUROPÄISCHE PATENTSCHRIFT

(11) **EP 1 525 731 B1**
(45) Veröffentlichungstag und Bekanntmachung des Hinweises auf die Patenterteilung: **02.05.2012**
(21) Anmeldenummer: 02781243.7
(22) Anmeldetag: 11.10.2002
(51) Int. Cl.: H04L 29/06, G07F 19/00, G07C 13/00

(54) **IDENTIFIKATION EINES BENUTZERS EINES MOBILTERMINALS UND GENERIERUNG EINER AKTIONSBERECHTIGUNG**
IDENTIFICATION OF A USER OF A MOBILE TERMINAL AND GENERATION OF AN ACTION AUTHORISATION
IDENTIFICATION D'UN UTILISATEUR D'UN TERMINAL MOBILE ET GENERATION D'UNE AUTORISATION D'ACTION

(30) Priorität: 30.07.2002 EP 02016883
(43) Veröffentlichungstag der Anmeldung: 27.04.2005
(60) Teilanmeldung: 08159082.0
(73) Patentinhaber: Modulatec GmbH, 64367 Mühltal (DE)
(72) Erfinder: CHAPPUIS, Pierre Mega-tel AG, CH-3073 Gümligen (CH)
(74) Vertreter: WSL Patentanwälte Partnerschaftsgesellschaft
(86) Internationale Anmeldenummer: PCT/EP2002/011420
(87) Internationale Veröffentlichungsnummer: WO 2004/019581

(56) Entgegenhaltungen:
- EP-A- 1 178 444
- WO-A-98/47116
- US-A- 6 078 908

## Beschreibung

Die vorliegende Erfindung bezieht sich auf ein Verfahren zur Identifizierung eines Benutzers eines Mobilterminals und zur Generierung einer Aktionsberechtigung für den Benutzer. Bei dem Mobilterminal kann es sich dabei insbesondere um ein Mobiltelefon, einen "Personal Digital Assistent" (PDA) oder dergleichen handeln. Bei den betreffenden Aktionen handelt es sich allgemein um Vorgänge, die eine Berechtigung erfordern, wie zum Beispiel zahlungsvorgänge, personenspezifisches Passieren von Türen oder Schranken oder um Stimmabgaben bei einer Wahl. Die Erfindung bezieht sich weiterhin auf eine Verwendung des erfindungsgemäßen Verfahrens, auf ein System zur Durchführung des erfindungsgemäßen Verfahrens sowie auf ein Softwareprogramm, durch das eine Implementierung des erfindungsgemäßen Verfahrens möglich ist.

Die meisten Sicherheitssysteme im Zusammenhang mit Kreditkarten, Zahlkarten, Electronic-Banking oder Zutrittskontrollen für Räumlichkeiten oder auch Computer-Netzwerke beruhen auf statischen Daten, wie zum Beispiel Kreditkartennumanern, Daten auf Magnetstreifen oder Chips, Fotos, Nummern einer Streichliste in gedruckter Form, Badge oder Token. Die damit verbundenen Risiken, beispielsweise bei Entwendung einer Kreditkarte sind offensichtlich und allgemein bekannt.

Sicherheitssysteme, die auf dynamischen Daten beruhen, werden beispielsweise bei Zutrittskontrollen, bei Netzwerkanmeldungen an einem Personal Computer oder beim E-Banking eingesetzt. Vorzugsweise werden hierfür Prozessoren verwendet, die in regelmäßige zeitlichen Abständen mittels spezieller Algorithmen dynamisch Werte für Codenummern generieren. Diese werden dann bei einer Anmeldung oder einem Zutritt oder dergleichen mit Referenzwerten verglichen. Bei Übereinstimmung wird eine Freigabe ausgelöst.

Neben diesen bekannten "SecurID-Komponenten", wie sie beispielweise von "RSA Security" vertrieben werden, gibt es in letzter Zeit auch vermehrt PDAs, "Organizers" und dergleichen sowie Mobiltelefone, die in der Lage sind, derartige Funktionen wahrzunehmen.

Eine Unsicherheitskomponente ist in diesem Zusammenhang beim Stand der Technik, dass sicherheitsrelevante Daten, wie zum Beispiel die Nummer einer Kreditkarte an eine an der Aktion beteiligten Partei, beispielsweise dem Betreiber eines Supermarktes übermittelt werden müssen. Beispielsweise werden sicherheiterelevante Daten einer Kreditkarte von einem Lesegerät an einem Zahlungsterminal erfasst, um eine Transaction zu initialisieren. Dabei werden die sicherheitsrelevanten Daten übermittelt, kontrolliert, freigegeben und die Zahlungsaktion terminiert. Die Daten auf der verwendeten Kreditkarte sind statisch. Sie werden auf dem Beleg, der zur Unterschrift vorgelegt wird, mehr oder weiniger ungeschützt ausgewiesen.

Einige Unternehmen sind dazu übergegangen, die letzten vier Ziffern beim Ausdruck auf dem Beleg zu trunkieren. Dennoch können missbräuchliche Anwendungen nicht ausgeschlossen werden, sofern die Karte dem Vertragspartner vorübergehend zugänglich gemacht wird. US 6,078,908 offenbart ein Verfahren für Authorisierung in Telebanking mittels einer Transaktions autorisationsnummer.

Der vorliegenden Erfindung liegt die Aufgabe zugrunde, eine Technik bereitzustellen, mit der es ermöglicht wird, einen Benutzer eines Kobilterminals, insbesondere eines Mobiltelefons, zu identifizieren und für ihn eine Berechtigung für die Ausführung einer Aktion im elektronischen Bankverkehr zu generieren, wobei bei einfacher Handhabung besonders hohe Sicherheit zu gewährleisten ist.

Diese Aufgabe wird erfindungagemäß durch die Merkmale der unabhängigen Ansprüche gelöst. Die abhängigen Ansprüche bilden den zentralen Gedanken der Erfindung in besonders vorteilhafter Weise weiter.

Gemäß der Erfindung wird ein Benutzer eines Mobilterminals, insbesondere eines Mobiltelefons, PDA's oder dergleichen zunächst identifiziert. Anschließend wird für ihn eine Berechtigung für die Ausführung einer Aktion erzeugt und an ihn sowie die weiteren involvierten Parteien übermittelt.

Dabei wird in einem ersten Schritt durch den Benutzer des Mobilterminals von dem Mobilterminal über eine Luftschnittstelle - beispielsweise mittels einer "Short Message Service" (SNS)-Nachricht eine Anforderung für eine Aktionsberechtigung an ein Identifikationsmodul gesendet. Das Identifikationsmodul ist dabei von dem Benutzer, respektive Betreiber unabhängig.

Zusammen mit der Anforderung wird ein Identifikationscode des Mobilterminals an den Identifikationsserver gesendet. Durch die gesendeten Daten ist es möglich, dass vom Identifikationsmodul der Benutzer identifiziert wird.

In einem folgenden Schritt wird von dem Identifikationsmodul ein Aktionscode erzeugt und dieser an das Mobilterminal gesendet. Der Aktionscode stellt für den Benutzer des Mobilterminals eine Berechtigung zur Durchführung einer Aktion dar.

Die der Erfindung zugrunde liegende Aufgabe wird durch die Merkmale des Anspruchs 1 gelöst. Der Aktionscode besitzt eine zeitlich begrenzte Gültigkeit. Die Dauer der zeitlichen Begrenzung kann dabei je nach spezieller Anforderung, die durch die betreffende Aktion gegeben sind, gewährt werden.

Vorteilhaft ist es außerdem, dass der Aktionscode nur einmalige Gültigkeit hat.

Durch Verwendung eines nur einmal gültigen Aktionscodes zusammen mit einer zeitlichen Begrenzung der Gültigkeit des Aktionscodes wird eine besonders hohe Sicherheit erzielt. Die Möglichkeit einer Entschlüsselung besteht zwar prinzipiell, aber bei geeignet gewählter zeitlicher Begrenzung kann eine Entschlüsselung innerhalb dieser vorgegebenen Zeitspanne so gut wie ausgeschlossen werden. Ebenso wenig ist die Zuordnung eines solchen Aktionscodes machbar, da die Applikation respektive die involvierten Partien nicht bekannt sind.

Weiterhin wird die Sicherheit dadurch erhöht, dass der Benutzer des Mobilterminals zusätzlich mit der Anforderung eine persönliche Identifikationsnummer (PIN) sendet und diese von dem Identifikationsmodul bei der Identifizierung des Benutzers mitberticksichtigt wird.

Außerdem kann eine Erhöhung der Sicherheit dadurch erzielt werden, dass die Kommunikation zwischen dem Mobilterminal und dem identifikationenerver - wenigstens teilweise - in verschlüsselter Form durchgeführt wird.

Weiterhin ist es vorteilhaft, wenn die Kommunikation zwischen dem Mobilterminal und dem Identifikationsmodul zumindest teilweise mittels eines Datenkanals, wie zum Beispiel mittels einer SMS-Nachricht des GSM-Standards erfolgt. Dadurch werden keine Nutzkanäle belegt. Außerdern ist dies aufgrund der weiten Verbreitung des SMS-Dienstes günstig. Schließlich ist ein derartiger Datenkanal auch störungssicherer als ein Nutz- beziehungsweise Sprachkanal.

Auch ist es vorteilhaft, wenn zur Kommunikation zwischen dem Mobilterminal und dem Identifikationsmodul Daten verwendet werden, die aus einem Datenträger oder Speicher, beispielsweise in Form einer "Subscriber Identity Module" (SIM) Karte in dem Mobilterminal ausgelesen werden.

Insbesondere können als weitere Sicherheitsmaßnahme bei der Sendung von dem Mobilterminal zu dem Identifikationamodul Netzwerkinformationen mitübermittelt werden. Beispielsweise bietet es sich an, dass Angaben über den betreffenden Provider und/oder die verwendete Mobilfunkzelle mitgesendet werden.

Den Empfang des Aktionscodes durch das Mobilterminal betreffend, kann es vorteilhaft sein, wenn der Aktionscode auf dem Display des Mobilterminals angezeigt wird, aber nicht auf einem Datenträger, beispielsweise auf einer SIM-Karte des Mobilterminals gespeichert wird. Hierdurch ist späteres missbräuchlichen Lesen des Aktionscodes ausgeschlossen.

Allerdings kann es auch Vorteile bringen, wenn bestimmte anderweitige Daten, die die Aktion betreffen, auf einem Datenträger des Mobilterminals gespeichert werden. Damit ist es möglich, die Daten später abrufbereit zur Verfügung zu haben und beispielsweise auch auf ein anderes Grät - zum Beispiel einen PC - übertragen zu können. Beispielsweise kann es sich bei diesen Daten um den Betrag einer Zahlung handeln oder - im Falle einer Bargeldabhebung von einem Geldautomaten - um den abgehobenen Betrag, um die Kenn-Nummer des verwendeten Geldautomaten oder um den Zeitpunkt der Hargeld-Abhebung.

Weiterhin kann bei dem erfindungagemäßen Verfahren von dem Identifikationsmodul der Aktionscode außer an das Mobilterminal auch noch an ein Terminal einer dritten Stelle beziehungsweise Partei gesendet werden. Vorteilhaft wird dabei zusätzlich eine dem Benutzer bekannte Identifikationsnummer mitgesendet.

Die dritte Partei ist dabei an der betreffenden Aktion beteiligt.

Besonders vorteilhaft ist es, wenn die Kommunikation zwischen dem Identifikationsmodul und dem Terminal ebenfalls über eine Luftschnittetelle erfolgt. Hierdurch ist es möglich, ein Terminal auch ohne Verfügbarkeit von festen Kommunikationaleitungen am Ort des Terminals für das erfindungsgemäße Verfahren einzusetzen.

Auch kann bei dieser Kommunikation eine Verschlüsselung zur Erhöhung der Sicherheit weiterhin vorteilhaft sein.

Insbesondere bietet sich wiederum an, die Kommunikation über einen Datenkanal zu übermitteln. Es ist heute beispielsweise leicht realisierbar, GSM-fähige und serverseitig ansteuerbare Zahlungsterminals zu produzieren.

Allgemein formuliert ist es gemäß dem erfindungsgemäßen Verfahren vorteilhaft, wenn mittels des Terminals der dritten Partei Vorgänge auslösbar sind, die zur Durchführung der betreffenden Aktion nötig sind.

Die Terminierung kann dadurch erfolgen, dass von dem Benutzer die oben genannte Identifikationsnummer direkt am Terminal der dritten Partei eingegeben wird. Da im Terminal die für die Aktion gültige Identifikationsnummer vorliegt, kann die Eingabe daraufhin kontrolliert werden und bei Übereinstimmung die Aktion terminiert werden.

Gemäß dem erfindungsgemäßen Verfahren kann alternativ in einem weiteren Schritt von dem Mobilterminal eine Nachricht, die beispielsweise die Identifikationsnummer beinhaltet, an das Identifikationsmodul gesendet werden. Das Verfahren kann so gestaltet sein, dass durch die Übermittlung dieser Nachricht die Aktion terminiert wird.

Die Terminierung erfolgt in diesem Fall dadurch, dass von dem Identifikationsmodul das Terminal der dritten Partei entsprechend angesteuert wird.

Weiterhin alternativ kann die Terminierung dadurch realisiert werden, dass von dem Mobilterminal eine Nachricht direkt an das Terminal gesendet wird. Diese Nachricht beinhaltet wiederum beispielsweise die zuvor vom Identifikationsmodul an das Terminal gesendete Identifikationsnummer. Dadurch wird die Sicherheit weiterhin signifikant erhöht.

Selbstverständlich kann auch die Kommunikation zwischen dem Hobilterminal und dem Terminal über eine Luftschnittstelle, in verschlüsselter Form und über einen Datenkanal erfolgen.

Für einen weiteren Einsatzbereich des erfindungsgemäßen Verfahrens kann es vorteilhaft sein, dass alternativ zum letztgenannten Schritt der Aktionscode durch den Benutzer des Mobilterminals auf andere Weise verwendet werden kann.

Insbesondere ist es möglich, eine Verwendung des Aktionscodes als "Passwort" vorzusehen. Beispielsweise kann das Verfahren derart ausgestaltet sein, dass der Benutzer durch Eingabe des Aktionscodes in einen PC über das Internet Zugriff auf nicht-öffentliche Webseiten erhält.

Auch kann ein solches Passwort beispielsweise als Zutrittskontrolle zu Netzwerken, beispielsweise Computer-Netzwerken vorgesehen sein. Der Aktionscode kann hierbei unmittelbar oder mittelbar als Passwort dienen. Auf diese Weise lässt sich eine "virtuelle zugangskontrolle" verwirklichen.

Selbstverständlich, müssen im Identifikationsmodul die für die betreffende Zahlung relevanten Daten des beteiligten Geldinstituts zur Verfügung stehen, beispielsweise in Form einer Kreditkartennummer mit Verfallsdatum und eines dazugehörenden Kreditrahmens des Benutzers.

Dies kann beispielsweise dadurch realisiert sein, dass das Identifikationsmodul mit einer entsprechenden Datenbank des betreffenden Geldinstituts verbunden ist.

Als weitere Sicherheitsmassnahme kann gefordert werden, dass die Anforderung von dem Benutzer durch die Übersendung einer persönlichen Identifikationsnummer an das Identifikationamodul bestätigt werden muss.

Im Identifikationsmodul werden die übermittelten Angaben unter Berücksichtigung der von dem betreffenden Geldinstitut zur Verfügung gestellten Daten nach Empfang der Anforderung überprüft.

Insbesondere kann dabei ein gegebenenfalls mitgesendeter Zahlungsrahmen auf Gültigkeit überprüft werden.

Bei passender Übereinstimmung und Plausibilität der empfangenen Daten wird dann vom Identifikationsmodul der Transaktionscode generiert. Dieser ist vorteilhaft nur einmal gültig und zudem nur zeitlich begrenzt gültig.

Anschließend wird vom Identifikationsmodul der Transaktionscode an das Mobilterminal gesendet. Es bietet sich selbstverständlich an, in diesem Schritt Angaben über die zeitliche Gültigkeit mitzusenden.

Weitere Merkmale, Vorteile und Eigenschaften sollen nunmehr anhand einer detaillierten Beschreibung von Ausführungsbeispielen und bezugnehmend auf die Figuren der beigefügten Zeichnungen erläutert werden. Es zeigen:
- Fig. 1: Grundlegendes Ablaufschema des erfindungsgemäßen Verfahrens;

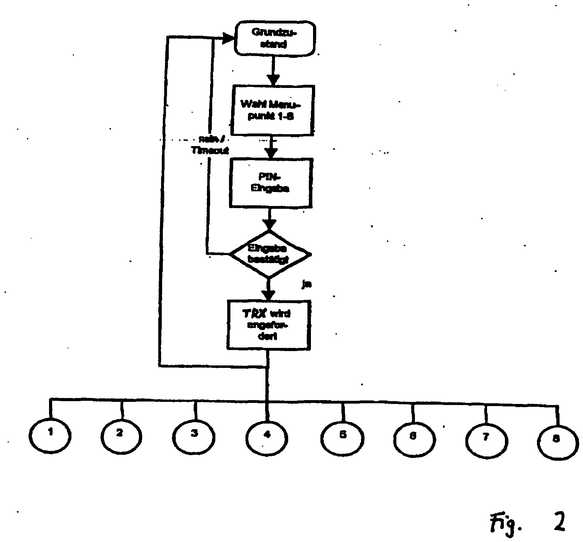

- Fig. 2: Datenflussplan - Grundmodul;
- Fig. 3: Datenflussplan - Übermittlung eines E-Banking Streichlistencodes;

Die Verwendung der Bezugszeichen ist im Folgenden durchgängig.

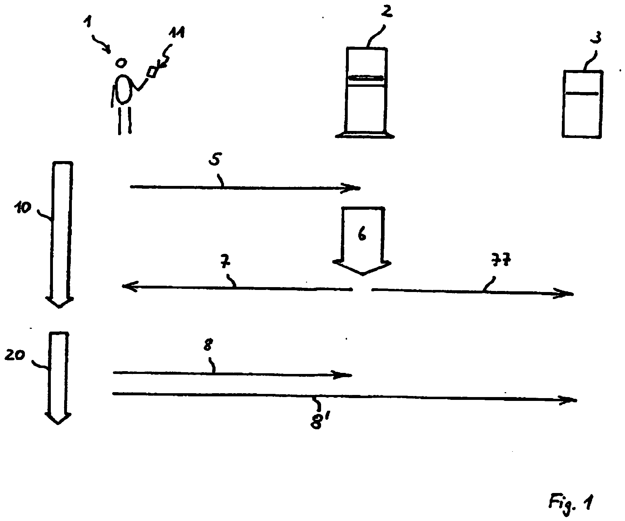

Fig. 1 zeigt schematisch die zeitliche Abfolge des erfindungagemaßen Verfahrens. Dabei ist ein Benutzer 1 eines Mobilterminals, hier in Form eines Mobiltelefons 11, ein Identifikationsmodul 2 und in der Regel ein Terminal 3 einer dritten Stelle beziehungsweise Partei beteiligt.

Insgesamt betrachtet lässt sich das Verfahren in der Regel in zwei Abschnitte untergliedern: eine "Vorautorisierung" 10 und eine "Terminierung" 20.

### Vorautorisierung

Bei der Vorautorisierung 10 fordert in einem ersten Schritt 5 der Benutzer 1 des Mobiltelefons 11 über Menü-Steuerung bei dem Identifikationsmodul 2 einen Aktionscode an. Dieser wird im folgenden der Einfachheit halber mit TRX in Anlehnung an das Wort "Transaktionscode" bezeichnet.

Zusammen mit dieser Anforderung werden außerdem im allgemeinen weitere aktionsspezifische Angaben übermittelt.

Beispielsweise kann mitgeteilt werden, auf welche Aktion sich der TRX beziehen soll. Eine solche Aktion ist der Erhalt eines TRX als Streichlistencode für das E-Banking.

Außerdem kann die Anforderungs-Nachricht Angaben enthalten, die ein gegebenenfalls in die Aktion eingebundenes Terminal 3 betreffen.

Je nach Aktion werden bei Schritt 5 außerdem weitere aktionsrelevante Daten übermittelt, wie beispielsweise

Angaben über die benutzte SIN-Karte, beispielsweise in Form des "Integrated Circuit Card Identifier" (ICCID), eine PIN-Nummer des Benutzers, Angaben über die verwendete Mobilfunkzelle - "Cell Identification" (Cell ID), Angaben über einen Zahlungsrahmen etc.

Die Anforderung 5 erfolgt beispielsweise mittels des SMS-Dienstes über ein Telekommunikationsnetz eines Mobilfunk-Netzbetreibers nach dem GSM Standard. Durch den entsprechenden Netzprovider wird die Nachricht - via SMS-Center - an das Identifikationsmodul 2 drahtlos übermittelt.

Besonders sicher ist es dabei, wenn die Sendung wenigstens teilweise verschlüsselt erfolgt. Dies kann beispielsweise unter Nutzung von "Triple Data Encryption Standard" (3DES) erfolgen.

In einem zweiten Schritt 6 wird in dem Identifikationsmodul 2 die Anforderung des Benutzers 1 registriert und die in der Anforderung 5 übermittelten Daten werden überprüft.

Auch kann hierzu beispielsweise von dem Identifikationsmodul der Standort des betreffenden zahlungsterminals mit dem Raum der Mobilfunkzelle, von der aus die Anforderung erfolgte, verglichen werden.

Bei Gültigkeit der übermittelten Daten wird daraufhin von dem Identifikationsmodul 2 - genauer gesagt durch einen Server des Identifikationsmoduls 2 - ein einmal gültiger TRX generiert, der mit einer Zeitbeschränkung versehen ist. Die Zeitbeschränkung kann dabei beliebig fixiert sein. Beispielsweise kann die zeitbesehränkung im Falle eines Zahlungsvorganges an einer Supermarkt-Kasse 15 Minuten betragen. Die Dauer der Zeitbeschränkung ist zweckmäßigerweise in Abhängigkeit der Aktion gewählt.

Die Dauer der Zeitbeschrankung hängt dabei unmittelbar mit der Sicherheit zusammen, da die Chance einer missbräuchlichen Entschlüsselung mit der Dauer der Gültigkeit prinzipiell wächst. Daher soll die Dauer der Gültigkeit sicherheitshalber auf ein adäquates Minimum reduziert sein.

Auf diese Weise ist es möglich, einen diesbezüglichen Missbrauch praktisch auszuschließen. Es steht zu erwarten, dass dadurch die allgemeine Akzeptanz des bargeldlosen Zahlungsverkehrs nennenswert gesteigert werden kann.

In einem weiteren Schritt 7 wird dann der so generierte TRX an den Benutzer 1 des Mobiltelefons 11 übermittelt.

Mit der Übersendung der TRX an den Benutzer 1 ist das "Kernelement" der Erfindung abgeschlossen, denn der TRX stellt eine Aktionsberechtigung für den Benutzer 1 dar. Als Beispiel sei hierfür ein als Streichlistencode verwendeter TRX angeführt.

Allerdings sind für die meisten der hier dargestellten Beispiele weitere Schritte vorteilhaft und daher im Folgenden näher beschrieben.

Bei den meisten der hier beschriebenen Anwendungen wird der TRX außerdem beispielsweise mittels einer SMS-Nachricht an ein Terminal 3 einer dritten, an der Aktion beteiligten Partei gesendet 77.

Bei dieser dritten Partei kann es sich beispielsweise um einen Internet-Server 3 handeln. • In Fig. 1 ist schematisch als Repräsentant für die dritte Partei ein Terminal 3 dargestellt.

Die Übermittlung an das Terminal 3 der dritten Partei kann wiederum über eine Luftschnittstelle erfolgen. Beispielsweise kann ein Zahlungsterminal 3 der dritten Partei über ein GSM-Modul ansteuerbar sein.

Auch bei der Übermittlung 77 kann wiederum durch eine Verschlüsselung der übermittelten Nachricht die Sicherheit weiter erhöht werden.

Als zusätzliche Sicherheitseinrichtung kann bei Schritt 77 eine Identifikationsnummer, beispielsweise in Form einer "Applikations-PIN", übermittelt werden, durch den die Provenienz des TRX vom Identifikationsmodul 2 bestätigt wird. Diese Applikations-PIN ist dem Benutzer 1 bekannt. Hierauf wird weiter unten noch näher eingegangen.

Damit ist die Vorautorisierung abgeschlossen.

### Terminierung

Die Terminierung kann auf unterschiedliche Arten (i), (ii), (iii) erfolgen:
(i) Falls am Terminal 3 die betreffende Applikations-PIN vorliegt, besteht eine Möglichkeit darin, dass vom Benutzer 1 die betreffende Applikations-PIN zur Terminierung 20 direkt am Terminal 3 der dritten Partei - beispielsweise über eine Tastatur - eingegeben wird.
(ii) Alternativ wird zur Terminierung 20 von dem Benutzer 1 des Mobiltelefons 11 eine Nachricht an das Identifikationsmodul 2 gesendet 8. Dabei kann es sich beispielsweise um die betreffende Applikations-PIN handeln. Es ist allerdings auch möglich, hierfür eine andere, zwischen dem Benutzer 1 des Mobiltelefons 11 und dem Betreiber des Identifikationsmoduls 2 speziell vereinbarte Nachricht zu verwenden.

Im Identifikationsmodul 2 wird daraufhin die empfangene Nachricht auf Richtigkeit beziehungsweise Gültigkeit geprüft.

Im Fall der Gültigkeit wird dann seitens des Identifikationsmoduls 2 mittels Nachrichtenübermittlung an das Terminal 3 der dritten Partei die Aktionaberechtigung aktiviert und die vom Benutzer 1 mittels Mobiltelefon 11 angeforderte Aktion kann erfolgen.

Die Nachrichtenübermittlung von dem Identifikationsmodul 2 an die weitere Partei 3 kann dabei wiederum über eine Luftscbnlttetelle erfolgen. Beispielsweise kann das Terminal 3 der dritten Partei von dem Zdentifikationsmodul 2 über ein GSM-Modul angesteuert werden.

Mit dieser Nachricht wird seitens des Mobiltelefons 11 das Verfahren terminiert und dadurch die Aktionsberechtigung aktiviert.

(iii) Schließlich ist es auch möglich, dass zur Terminierung von dem Benutzer 1 des Mobiltelefons 11 eine Nachricht 8' direkt an das Terminal 3 der dritten Partei gesendet wird. Diese Nachricht beinhaltet neben der TRX wiederum eine weitere Nachricht, beispielsweise wieder in Form der "Applikations-PIN", die zwischen dem Benutzer 1 des Mobiltelefons 11 und der dritten Partei 3, beispielsweise einem "Applikationsbetreiber", speziell hierfür vereinbart ist.

Insbesondere kann das Verfahren so gestaltet sein, dass die "Applikations-PIN" - wie oben dargestellt - bei der Vorautorisierung 10 vom Identifikationsmodul 2 zusammen mit dem TRX an das Terminal 3 der dritten Partei gesendet 77 wird und somit am Terminal 3 vorliegt.

Die übertragung der Nachricht 8' muss nicht ausschließlich mittels des Mobiltelefons 11 erfolgen. Sie kann beispielsweise alternativ dazu von einem PC des Benutzers 1 über das Internet auf einen Server, der als Terminal 3 eines Applikationsbetreibers fungiert, übermittelt werden. Beispielsweise kann es sich dabei um eine Nachricht nach dem "File Transfer Protocol" (PTP) handeln.

Die Nachricht 8' kann auch als Passwort-Angabe eingesetzt werden. Beispielsweise kann auf diese Weise ein Zugang zu Netzwerken, beispielsweise zu einem Intranet geregelt beziehungsweise kontrolliert werden.

Auf jeden Fall wird bei der Terminierung 20 durch den Benutzer 1 die Aktionsberechtigung aktiviert und der vom Benutzer 1 gewünschte beziehungsweise angeforderte Vorgang kann durchgeführt werden.

Ein Beispiel für einen Applikationsbetreiber ist eine Bank. Beispielsweise kann der Benutzer 1 (im Schritt 5) bei der Bank einen Zugriff auf gesicherte fniebseiten für E-Banking anfordern. Im Schritt 8' sendet dann der Benutzer 1 von seinem PC zusammen mit der TRX den zwischen dem Benutzer 1 und der Bank vereinbarten "Applikations-PIN" über das Internet zum Server der Bank. Die "Applikations-PIN" hat in diesem Fall also "Passwort-Punktion".

Vorteilhaft an dem angegebenen Verfahren ist dabei insbesondere, dass an die weitere Partei keine sicherheitsrelevanten Daten des Benutzers 1 geleitet werden müssen. So ist es nicht nötig, dass beispielsweise die für die Transaktion verwendete Kreditkartennummer dem Zahlungsempfänger übermittelt wird.

Möglich ist auch der Fall, dass der Betreiber des Identifikationsmoduls 2 und die dritte Partei 3 identisch sind. In diesem Fall erübrigt sich offensichtlich die durch Schritt 77 dargestellte Übermittlung der TRX von dem Identifikationsmodul 2 an die dritte Partei 3.

Im allgemeinen ist jedoch das Identifikationsmodul 2 von der dritten Partei unabhängig.

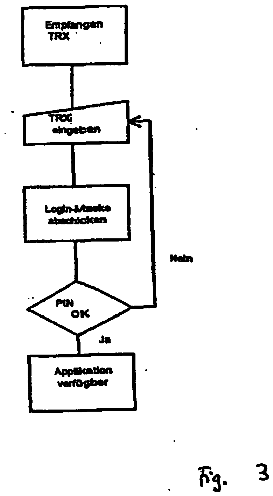

Fig. 3 zeigt das Grundmodul. In einem Grundzustand wird dabei mittels Menü-Steuerung ein Modul für die Übermittlung eines E-Banking Streichlistencodes angewählt. Die Eingabe des Moduls wird mit einer PIN durch den Benutzer 1 bestätigt.

Selbstverständlich muss das Mobiltelefon 11 den Benutzers 1 vorab entsprechend programmiert sein. Dies ist mit heute verfügbaren SIM-Karten möglich.

Beispielsweise kann das menu des Mobiltelefons 11 hierfür so eingerichtet werden, dass ein Menüpunkt "Konfiguration" mit einem Unter-Menüpunkt "Neuer Service" anwählbar ist. Über diesen können dann auch Module für unterschiedliche Aktionstypen-durch den Benutzer 1 eingerichtet werden.

Im folgenden soll - als kurzer Einschub - am Beispiel "Streichlistencode" kurz dargestellt werden, wie eine entsprechende Einrichtung des Mobiltelefons 11 prinzipiell abfolgen könnte. Hierauf wird nur kurz eingegangen, da es sich dabei nicht um den Kern der vorliegenden Erfindung handelt. Für den auf diesem Gebiet zuständigen Fachmann ist die entsprechende Programmierung der SIM-Karte Stand der Technik. Da die entsprechende Programmierung aber in unmittelbaren Zusammenhang mit der Erfindung steht, wird in Form eines Überblicks aus Sicht des Benutzers 1 der Ablauf der Einrichtung im Folgenden dargestellt.

Zunächst wird durch den Benutzer 1 mittels PC und Internet eine Verbindung zu der betreffenden Bank hergestellt. Der Programmteil Konfiguration auf der entsprechenden Web-Seite der Bank wird angewählt und die Vertragsnummer (sechs bis zehnstellig), ein Passwort (mindestens vierstellig) und eventuell noch weitere geeignete Daten eingegeben. Nach Übersendung werden die Daten im Server der Bank überprüft und bei Gültigkeit ein einmal gültiger Freischalt-Code generiert. Dieser wird zusammen mit einem Initializierungs-Passwort per Post an den Benutzer 1 gesendet.

Vom Benutzer 1 wird daraufhin mit dem Mobiltelefon 11 der Menüpunkt "Konfiguration" und im folgenden "Neuer Service" angewählt. Daraufhin wird vom Mobilterminal 11 der Freischalt-Code angefordert, der dann vom Benutzer 1 eingegeben und anschließend an das Identifikationsmodul gesendet wird.

Die Übersendung erfolgt verschlüsselt, beispielsweise mittels 3DBS und beinhaltet die SIM-Kartennummer, zum Beispiel in Form des zwanzigstelligen ICCID sowie als Netzwerkinformation die Angabe des betreffenden Providers und der benutzten Mobilfunkzelle (Cell ID).

Vom Identifikationsmodul 2 wird daraufhin der erhaltene Freischalt-Code kontrolliert und bei Gültigkeit der erste Teil des Programm-Moduls "Streichliste" an das Mobiltelefon 11 gesendet.

Vom Mobiltelefon 11 erfolgt daraufhin die Aufforderung zur Eingabe des Initialisierungs-Passwortes. Dieses wird vom Benutzer 1 eingegeben und daraufhin wird der neue Menüpunkt "Streichliste" generiert.

Nach Anwahl des Menüpunktes "Streichliste" wird der Name der betreffenden Bank angezeigt. Dieser wird vom Benutzer durch Drücken der Taste "OK" bestätigt.

Daraufhin wird vom Mobiltelefon 11 die Eingabe eines Passwortes angefordert. Nach Eingabe dieses Passwortes durch den Benutzer 1 wird dieses wiederum an das Identifikationsmodul 2 gesendet.

Vom Identifikationsmodul 2 wird das letztgenannte Passwort kontrolliert und bei Gültigkeit der zweite und letzte Teil des Programm-Moduls "Streichliste" an das Mobiltelefon 11 gesendet.

Damit ist die Einrichtung des neuen Moduls "Streichlist" abgeschlossen.

Nach diesem Einschub wird nun wieder auf Fig. 3 Bezug genommen.

Ausgehend von dem Grundzustand wählt der Benutzer 1 also das gewünschte Modul (beziehungsweise den gewünschten Aktionstyp) mittels Menü-Steuerung auf seinem Mobiltelefon 11 an.

Je nach Modul werden in der Regel weitere Angaben nötig sein. Derlei Angaben sind selbstverständlich alternativ auch in einem später folgenden Schritt möglich.

Durch Eingabe einer PIN bestätigt der Benutzer die Eingabe und sendet sie an das Identifikationsmodul 2. Durch diese Sendung wird ein TRX angefordert. Dies entspricht also dem Schritt 5 aus Fig. 1.

Die Eingaben werden durch das Identifikationsmodul 2 überprüft und bei Gültigkeit wird ein einmal gültiger TRX mit zeitlich begrenzter Gültigkeit generiert. Dieser TRX wird sowohl an das Mobiltelefon 11 des Benutzers 1 als auch in der Regel an das Terminal 3 der betreffenden dritten Partei gesendet.

Bei falschen Eingaben des Benutzers 1 oder Zeitüberschreitung bei der Bingabe wird von dem Hobiltelefon automatisch in den Grundzustand zurilckgeschaltet.

Selbstverständlich kann eine maximale Anzahl für mögliche Eingabeversuche eingerichtet sein.

Fig. 6 zeigt den Ablauf im Fall von Modul Vier, Streichlistencode für E-Banking.

In diesem Fall werden vom Benutzer 1 zusammen mit der Anforderung 5 Angaben über die gewünschte Bankverbindung, also über die betreffende Bank und das betreffende Konto übermittelt.

Das Verfahren kann so gestaltet sein, dass der TRX den angeforderten Streichlistencode darstellt.

Nach Empfang des TRX mittels SMS-Nachricht kann der Benutzer 1 in eine Login-Maske auf seinem mit dem Internet verbundenen PC auger seiner User-ID den TRX und eine PIN eingeben. Dadurch hat er nun die Möglichkeit, den TRX als Streichlistencode zu verwenden.

Bei korrekter Eingabe wird die E-Banking-Applikation gestartet. Andernfalls muss der Ablauf wiederholt werden.

Insbesondere im dargestellten Fall des Streichlistencodes - aber auch in anderen Modulen - kann es vorteilhaft sein, wenn der TRX auf dem Display des Mobiltelefons 11 angezeigt wird, aber nicht in dem Mobiltelefon, zum Bespiel auf der SIM-Karte gespeichert wird. Dadurch wird ein späterer Missbrauch durch Auslesen des TRX aus dem Mobiltelefon 11 ausgeschlossen.

Die Vorteile des erfindungsgemäßen Verfahren lassen sich wie folgt zusammenfassen:
- An die weitere Partei, die neben dem Benutzer an der Aktion beteiligt ist, werden keine sicherheitsrelevanten Daten des Benutzers geleitet. Dennoch kann die Aktion unter besonders hoher Sicherheit durchgeführt werden.
- Durch einen TRX, der einerseits zeitlich limitiert ist und andererseits nur einmal (oder nur begrenzt oft) gültig ist, wird der Sicherheitsfaktor entscheidend erhöht.
- Der Ablauf einer Aktion kann durch die erfindungsgemäße untergliederung des Verfahrens in Vorautorisierung" und "Terminierung" beschleunigt werden.
- Es sind sehr viele unterschiedliche Terminaltypen erfindungegemäß ansteuerbar, da die Ansteuerung über eine Luftschnittstelle erfolgt.
- Bei der Durchführung einer Wahl kann durch die ortsunabhängige und zeitlich besonders flexible Gestaltungsmöglichkeit einer Stimmabgabe eine Zunahme der Wahl- beziehungsweise Abstimmungsbeteiligung erwartet werden.
- Ein modularer Aufbau erlaubt eine sehr bedienerfreundliche Anwendung des Verfahrens, wobei die Anwendung auf sehr unterschiedliche Aktionstypen möglich ist.

### Bezugezeichenliste

- 1: Benutzer eines Mobilterminals / mobiltelefons
- 2: Identifikationsmodul
- 3: Terminal der dritten Partei
- 5: Anforderung einer TRX durch den Benutzer
- 6: Generierung einer TRX
- 7: übersendung der TRX an das Mobilterminal
- 8: Übersendung der TRX und einer PIN an das Identifikationsmodul
- 8': Übersendung der TRX und einer PIN an das Terminal der dritten Partei
- 10: Vorautorisierung
- 11: Mobilterminal / Mobiltelefon
- 20: Terminierung

## Patentansprüche

1. Verfahren zur Identifizierung eines Benutzers (1) und Generierung einer Aktionsberechtigung für den Benutzer (1) unter Zuhilfenahme eines Mobilterminals (11) und eines Identifikationsmoduls (2),
aufweisend die folgenden Schritte:
a) Übersendung (5) einer Aktionsberechtigungs-Anforderung zusammen mit einem Identifikationscode von dem Mobilterminal (11) an das Identifikationsmodul (2), wobei die Aktionsberechtigungs-Anforderung die Art und wenigstens einen Parameter der angeforderten Aktionsberechtigung angibt.
b) Überprüfung durch das Identifikationsmodul (2), ob für den Identifikationscode eine Aktionsberechtigung mit dem wenigstens einen Parameter zulässig ist, und für den Fall der Zulässigkeit:
c) Generierung (6) eines Transaktionscodes für die angeforderte Aktionsberechtigung durch das Identifikationsmodul (2), wobei der Transaktionscode gegenüber wenigstens einer dritten Stelle eine Freigabe der Aktion mit dem wenigstens einen Parameter durch das Identifikationsmodul dokumentiert, und
d) Übersendung (7) des Transaktionscodes von dem Identifikationsmodul (2) an das Mobilterminal (11),
wobei die dritte Stelle der Server einer Bank ist, dass der Transaktionscode ein Streichlistencode für das E-Banking ist, der zu der Durchführung einer E-Banking-Aktion berechügt, dass der Transaktionscode von dem Identifikationsmodul zusätzlich an den Bankserver bzw. ein Terminal des Bankservers übermittelt wird, dass der Transaktionscode nur einmal nutzbar ist, und dass der Transaktionscode nach Übersendung an das Mobilterminal eine zeitlich begrenzte Gültigkeitsdauer hat, dass bei der Übersendung des Transaktionscodes an den Bankserver bzw. ein Terminal des Bankservers zusätzlich eine dem Benutzer bekannte Identifikationsnummer mitgesendet wird und zur Terminierung der Aktion von dem Benutzer eine Nachricht an den Bankserver bzw. ein Terminal des Bankservers gesendet wird, welche neben dem Transaktionscode die Identifikationsnummer enthält.

2. Verfahren nach Anspruch 1, wobei im Rahmen einer Vorautorisierung der Benutzer eines Mobilterminals, zum Beispiel in Form eines Mobiltelefons, über eine Menü-Steuerung einen Transaktionscode bei dem Idenfifikationsmodul anfordert.

3. Verfahren nach Anspruch 2, **dadurch gekennzeichnet, dass** die Kommunikation zwischen dem Mobilterminal und dem Identifikationsmodul wenigstens teilweise verschlüsselt erfolgt.

4. Verfahren nach Anspruch 3, **dadurch gekennzeichnet, dass** bei der Kommunikation zwischen dem Mobilterminal (11) und dem Identfikationsmodul (2) aus einem Datenträger in dem Mobilterminal (11) ausgelesene Daten verwendet werden.

5. Verfahren nach Anspruch 4, **dadurch gekennzeichnet, dass** die Anforderung des Transaktionscodes verschlüsselt erfolgt und als ausgelesene Daten die SIM-Kartennummer eines Mobiltelefons enthält.

6. Verfahren nach einem der Ansprüche 1 bis 6, **dadurch gekennzeichnet, dass** der Transaktionscode auf dem Display des Mobilterminals (11) angezeigt, aber nicht auf einem Datenträger in dem Mobilterminal (11) gespeichert wird.

7. Verfahren nach einem der vorhergehenden Ansprüche, **dadurch gekennzeichnet, dass** in Schritt a) zusätzlich Angaben über die betreffende Bank und das betreffende Konto von dem Mobilterminal (11) an das Identifikationsmodul (2) gesendet werden.

8. Verfahren nach Anspruch 1, **dadurch gekennzeichnet, dass** die Kommunikation zwischen dem Mobilterminal (11) und dem Identifikationsmodul wenigstens teilweise mittels eines Datenkanals, wie zum Beispiel einer SMS-Nachricht des GSM Standards erfolgt.

9. Verfahren nach einem der Ansprüche 1 bis 8, **dadurch gekennzeichnet, dass** bei Schritt a) zusätzlich eine Plausibilitätsprüfung erfolgt, indem bspw. Dem Identifikationsmodul Netzwerkinformationen übermittelt werden, die das für die Übersendung bei Schritt a) verwendete Netzwerk betreffen.

10. Verfahren nach Anspruch 9, **dadurch gekennzeichnet, dass** die Netzwerkinformationen Angaben über einen Provider und/oder die bei Schritt a) verwendete Funkzelle beinhaltet.

11. Verfahren nach einem der Ansprüche 1 bis 10, **dadurch gekennzeichnet, dass** die Informationen bezüglich der Aktion, auf die sich Schritt a) bezieht, in einem Datenträger des Mobilterminals (11) abgelegt werden.

12. Verfahren nach Anspruch 11, **dadurch gekennzeichnet, dass** die Informationen von dem Mobilterminal (11) ausgelesen und/oder zu einem anderen Gerät übertragen werden.

13. Verfahren nach einem der Ansprüche 1 bis 12, **dadurch gekennzeichnet, dass** bei Schritt d) der Transaktionscode und/oder eine Identifikationsnummer von dem Identifikationsmodul (2) zusätzlich an ein Terminal (3) der dritten Stelle gesendet (77) wird.

14. Verfahren nach Anspruch 13, **dadurch gekennzeichnet, dass** die Kommunikation zwischen dem Identifikationsmodul (2) und dem Terminal (3) über eine Luftschnittstelle erfolgt.

15. Verfahren nach Anspruch 13 oder 14, **dadurch gekennzeichnet, dass** die Kommunikation zwischen dem Identifikationsmodul (2) und dem Terminal (3) wenigstens teilweise verschlüsselt erfolgt.

16. Verfahren nach einem der Ansprüche 13 bis 15, **dadurch gekennzeichnet, dass** in einem weitem Schritt e) eine Nachricht von einem Sendegerät über ein Telekommunikationsnetz an das Terminal (3) gesendet wird, wobei die Aktion, auf die sich Schritt a) bezieht durch den Schritt e) terminiert wird.

17. Verfahren nach Anspruch 16, **dadurch gekennzeichnet, dass** die Kommunikation zwischen dem Sendegerät und dem Terminal (3) wenigstens teilweise verschlüsselt erfolgt.

18. Verfahren nach Anspruch 16 oder 17, **dadurch gekennzeichnet, dass** die Nachricht eine Identifikationsnummer beinhaltet.

19. Verfahren nach einem der Ansprüche 16 bis 18, **dadurch gekennzeichnet, dass** es sich bei dem Sendegerät um einen Personal-Computer handelt.

20. Identifikationsmodul (2), programmiert zur Durchführung der für das Identifikationsmodul vorgesehenen Schritte des Verfahrens nach einem der Ansprüche 1 bis 19.

21. Terminal (3) eines Bankservers, programmiert zur Durchführung der für das Terminal vorgesehenen Schritte des Verfahrens nach einem der Ansprüche 1 bis 19.

22. Software-Programm, **dadurch gekennzeichnet, dass** es die Implementierung eines Verfahrens nach einem der Ansprüche 1 bis 19 ermöglicht.

## Claims

1. Method for identifying a user (1) and generating an action authorization for the user (1) using a mobile terminal (11) and an identification module (2),
having the following steps:
a) transmission (5) of an action-authorization request together with an identification code from the mobile terminal (11) to the identification module (2), wherein the action-authorization request indicates the nature and at least one parameter of the requested action authorization.
b) checking by the identification module (2), of whether an action authorization with the at least one parameter is permissible for the identification code, and in the event that it is permissible:
c) generation (6) of a transaction code for the requested action authorization by the identification module (2), wherein the transaction code documents a release of the action with the at least one parameter by the identification module vis-à-vis at least one third party, and
d) transmission (7) of the transaction code from the identification module (2) to the mobile terminal (11),
wherein the third party is the server of a bank, the transaction code is a cross-off list code for e-banking, which gives authorization to carry out an e-banking action, the transaction code from the identification module is additionally transmitted to the bank server or a terminal of the bank server, the transaction code can only be used once, and the transaction code is valid for a limited period of time following transmission to the mobile terminal, when the transaction code is transmitted to the bank server or a terminal of the bank server an identification number known to the user is additionally sent with it and, for termination of the action by the user a message containing the identification number in addition to the transaction code is sent to the bank server or a terminal of the bank server.

2. Method according to claim 1, wherein within the framework of a pre-authorization the user of a mobile terminal, for example in the form of a mobile telephone, requests a transaction code from the identification module via a menu control.

3. Method according to claim 2, **characterized in that** communication between the mobile terminal and the identification module is at least partially encrypted.

4. Method according to claim 3, **characterized in that** during communication between the mobile terminal (11) and the identification module (2) data read out from a data carrier in the mobile terminal (11) are used.

5. Method according to claim 4, **characterized in that** the request for the transaction code is encrypted and contains the SIM card number of a mobile telephone as read-out data.

6. Method according to one of claims 1 to 6, **characterized in that** the transaction code is displayed on the display of the mobile terminal (11), but is not stored in a data carrier in the mobile terminal (11).

7. Method according to one of the previous claims, **characterized in that** in step a) details about the relevant bank and the relevant account are additionally sent from the mobile terminal (11) to the identification module (2).

8. Method according to claim 1, **characterized in that** communication between the mobile terminal (11) and the identification module takes place at least partially by means of a data channel such as for example an SMS message of the GSM standard.

9. Method according to one of claims 1 to 8,
**characterized in that**
in step a) a plausibility check additionally takes place by for example network information which relates to the network used for the transmission in step a) being transmitted to the identification module.

10. Method according to claim 9,
**characterized in that**
the network information contains details about a provider and/or the radio cell used in step a).

11. Method according to one of claims 1 to 10,
**characterized in that**
information with regard to the action to which step a) refers is stored in a data carrier of the mobile terminal (11).

12. Method according to claim 11,
**characterized in that**
the information is read out from the mobile terminal (11) and/or transmitted to another device.

13. Method according to one of claims 1 to 12, **characterized in that** in step d) the transaction code and/or an identification number is additionally sent (77) from the identification module (2) to a terminal (3) of the third party.

14. Method according to claim 13,
**characterized in that**
communication between the identification module (2) and the terminal (3) takes place via an air interface.

15. Method according to claim 13 or 14,
**characterized in that**
communication between the identification module (2) and the terminal (3) is at least partially encrypted.

16. Method according to one of claims 13 to 15,
**characterized in that**
in a further step e) a message is sent to the terminal (3) from a sending device via a telecommunications network, wherein the action to which step a) refers is terminated by the step e).

17. Method according to claim 16,
**characterized in that**
communication between the sending device and the terminal (3) is at least partially encrypted.

18. Method according to claim 16 or 17,
**characterized in that**
the message contains an identification number.

19. Method according to one of claims 16 to 18,
**characterized in that**
the sending device is a personal computer.

20. Identification module (2), programmed to carry out the steps of the method according to one of claims 1 to 19 provided for the identification module.

21. Terminal (3) of a bank server, programmed to carry out the steps of the method according to one of claims 1 to 19 provided for the terminal.

22. Software program,
**characterized in that**
it makes possible the implementation of a method according to one of claims 1 to 19.

## Revendications

1. Procédé d'identification d'un utilisateur (1) et de génération d'une autorisation d'action pour l'utilisateur (1) à l'aide d'un terminal mobile (11) et d'un module d'identification (2),
ledit procédé comportant les étapes suivantes :
a) l'envoi (5) d'une requête d'autorisation d'action conjointement avec un code d'identification du terminal mobile (11) au module d'identification (2), la requête d'autorisation d'action indiquant le type et au moins un paramètre de l'autorisation d'action demandée,
b) la vérification par le module d'identification (2) si une autorisation d'action comportant l'au moins un paramètre est acceptée pour le code d'identification, et en cas d'acceptation :
c) la génération (6) par le module d'identification (2) d'un code de transaction pour l'autorisation d'action demandée, le code de transaction prouvant par rapport à au moins un tiers une validation de l'action comportant l'au moins un paramètre par le module d'identification, et
d) l'envoi (7) du code de transaction du module d'identification (2) au terminal mobile (11),
le tiers étant le serveur d'une banque, le code de transaction étant un code d'une liste de codes d'accès pour la banque électronique qui autorise la réalisation d'une action de banque électronique, le code de transaction étant en plus transmis du module d'identification au serveur de banque ou à un terminal du serveur de banque, le code de transaction n'étant utilisable qu'une seule fois, et le code de transaction ayant une durée de validité limitée dans le temps après l'envoi au terminal mobile, un numéro d'identification connu de l'utilisateur étant en plus envoyé en même temps que l'envoi du code de transaction au serveur de banque ou à un terminal du serveur de banque et pour terminer l'action un message, qui contient en plus du code de transaction le numéro d'identification, étant envoyé par l'utilisateur au serveur de banque ou au terminal du serveur de banque.

2. Procédé selon la revendication 1, dans lequel dans le cadre d'une autorisation préalable l'utilisateur d'un terminal mobile, se présentant par exemple sous la forme d'un téléphone mobile, demande un code de transaction au module d'identification par le biais d'une commande par menu.

3. Procédé selon la revendication 2, **caractérisé en ce que** la communication entre le terminal mobile et le module d'identification s'effectue de façon codée au moins partiellement.

4. Procédé selon la revendication 3, **caractérisé en ce que** lors de la communication entre le téléphone mobile (11) et le module d'identification (2) on utilise des données qui sont lues sur un support de données dans le terminal mobile (11).

5. Procédé selon la revendication 4, **caractérisé en ce que** la demande du code de transaction s'effectue de façon codée et contient comme données lues le numéro de carte SIM d'un téléphone mobile.

6. Procédé selon l'une des revendications 1 à 6, **caractérisé en ce que** le code de transaction est affiché sur le dispositif d'affichage du terminal mobile (11) mais n'est pas mémorisé sur un support de données dans le terminal mobile (11).

7. Procédé selon l'une des revendications précédentes, **caractérisé en ce que** à l'étape a) des données relatives à la banque concernée et au compte concerné sont envoyés du terminal mobile (11) au module d'identification (2).

8. Procédé selon la revendication 1, **caractérisé en ce que** la communication entre le terminal mobile (11) et le module d'identification s'effectue au moins partiellement par un canal de données, comme par exemple un message SMS de la norme GSM.

9. Procédé selon l'une des revendications 1 à 8, **caractérisé en ce que** à l'étape a) une vérification de la plausibilité est en plus effectuée en transmettant au module d'identification des informations de réseau qui concernent le réseau utilisé pour la transmission à l'étape a).

10. Procédé selon la revendication 9, **caractérisé en ce que** les informations de réseau contiennent des données sur un fournisseur et/ou la cellule radioélectrique utilisée à l'étape a).

11. Procédé selon l'une des revendications 1 à 10, **caractérisé en ce que** des informations sur l'action à laquelle se rapporte l'étape a) sont stockées dans un support de données du terminal mobile (11).

12. Procédé selon la revendication 11, **caractérisé en ce que** les informations sont lues par le terminal mobile (11) et/ou sont transmises à un autre appareil.

13. Procédé selon l'une des revendications 1 à 12, **caractérisé en ce que** à l'étape d) le code de transaction et/ou un numéro d'identification est en plus envoyé (77) du module d'identification (2) à un terminal (3) du tiers.

14. Procédé selon la revendication 13, **caractérisé en ce que** la communication entre le module d'identification (2) et le terminal (3) s'effectue par une interface aérienne.

15. Procédé selon la revendication 3 ou 4, **caractérisé en ce que** la communication entre le module d'identification (2) et le terminal (3) s'effectue de façon codée au moins partiellement.

16. Procédé selon l'une des revendications 13 à 15, **caractérisé en ce que** dans une autre étape e) un message est envoyé d'un appareil d'émission au terminal (3) par le biais d'un réseau de télécommunications, l'action à laquelle se rapporte l'étape a) étant terminée par l'étape e).

17. Procédé selon la revendication 16, **caractérisé en ce que** la communication entre l'appareil d'émission et le terminal (3) s'effectue de façon codée au moins partiellement.

18. Procédé selon la revendication 16 ou 17, **caractérisé en ce que** le message contient un numéro d'identification.

19. Procédé selon l'une des revendications 16 à 18, **caractérisé en ce que** l'appareil d'émission est un ordinateur personnel.

20. Module d'identification (2) programmé pour exécuter les étapes, prévues pour le module d'identification, du procédé selon l'une des revendications 1 à 19.

21. Terminal (3) d'un serveur de banque programmé pour exécuter les étapes, prévu pour le terminal, du procédé selon l'une des revendications 1 à 19.

22. Logiciel, **caractérisé en ce qu'**il permet l'implémentation du procédé selon l'une des revendications 1 à 19.
